# EUROPEAN PATENT APPLICATION

(11) **EP 1 212 964 A2**
(43) Date of publication of application: **12.06.2002**
(21) Application number: 01403091.0
(22) Date of filing: 30.11.2001
(51) Int. Cl.: A47B 81/06

(54) **Stacking device for cd cases**

(30) Priority: 01.12.2000 DE 20020387 U
(71) Applicant: SUNHING MILLENNIUM LIMITED, Kowloon, Hong Kong (HK)
(72) Inventor: Tat-chi, Chow, Clearwater Bay, Kowloon (HK); Bennet, Jason, (HK)
(74) Representative: Schrimpf, Robert

(57) **Abstract**

This invention relates to a stacking device for CD cases or similar arranged in a general form of equilateral triangle. In doing so, CD cases can be placed into the rack through all 3 sides of the triangular device and the support platforms or rack elements are generally supported by columns or similar spacing devices at the corners of the equilateral triangle.

## Description

For stacking CD cases or similar plate-like cassettes in the audio or video sector it is known to arrange three rod-like rack elements perpendicularly on a base plate, a plurality of horizontally aligned compartments arranged spaced apart one above the other being connected to said rack elements. In this case the arrangement is such that two front rack elements are so arranged at a distance apart that an insertion aperture is provided which is of slightly larger width than the width of the CD case to be inserted. The rear rack element is disposed at a distance from the connecting plane of the two front rack elements, which is smaller than the length of the CD cases to be inserted so that the rear rack element forms a stop member and the inserted CD case protrudes from the insertion aperture and is readily accessible to be gripped. In this stacking device the CD cases to be stacked can only be inserted from one side.

The invention is based on the object of devising a stacking device of the above-mentioned type, which makes it possible for CD cases to be inserted into the compartments from a plurality of sides.

This object is achieved by a stacking device for CD cases or the like, with three rack elements which in relation to the basic contour are arranged in the form of an equilateral triangle, in each case at a vertex, and between which there is provided a plurality of horizontal compartments which are respectively arranged one above the other and at a distance apart, wherein the lateral spacing between two respective rack elements which are adjacent in the direction of a base line is slightly larger than the width of a CD case to be inserted into a compartment. A tower-like stacking device of this type has the advantage that CD cases can be inserted from any side. The access to adjacent CD cases is facilitated if the CD cases are inserted respectively into successive compartments in each instance from a different side of the triangular basic contour. However, this also offers the possibility of coordinated stacking, in which a specific subject range is allocated to each insertion side.

In a development of the invention it is provided for each of the rack elements to be formed in one piece. In this case the rack elements may be of rod-like design, for example produced from wood, or may also be tubular produced from plastics material.

In a development of the invention it is provided for each of the compartments to be connected individually to the rack elements. In this embodiment the individual compartments are produced from plastics material, for example, and are then secured to the rack elements, for example in transverse slots in the rod-like rack elements.

In another development of the invention it is provided for a plurality of compartments to be joined together by adhesion or cohesion to form a compartment block which is connected to the rack elements. This development offers a simplification in manufacture, since the compartment block, for example consisting of plastics material, can be injection-moulded as one part which is then securely connected to the three rack elements.

In another development of the invention it is provided for each of the rack elements to be assembled from a plurality of component parts, wherein at least one compartment is connected by adhesion or cohesion in each case to three rack elements associated with the vertices. In this embodiment individual compartments or also one or more compartment blocks are produced by adhesion or cohesion, for example as injection-moulded components from plastics material, which are then assembled one above the other to form a stacking element. This embodiment also offers the possibility of producing, within a predetermined grid, stacking elements of different height by a simple plug-and-socket connection.

According to the invention, the rack elements can be securely joined together via a base plate and/or via a top member. The base plate can be produced from a different heavy material so that the stacking device is imparted a certain degree of basic stability by the base plate and is protected from tipping.

In another development it is provided for the rack elements, securely joined together by a base plate and a top plate, to have as compartments respective inwardly directed lugs which in each case extend in the direction of the base line on the adjacent rack elements.

In another development of the invention it is provided for the rack elements to be of lamellar design and they extend respectively along the base lines forming an equilateral triangle, wherein the compartments are formed by slots in the interconnected lamellar rack elements. The width of the slots in horizontal direction is slightly larger than the width of the CD cases to be inserted, whereas the height of the slots in vertical direction is slightly larger than the thickness of the CD cases to be inserted.

Further features of the invention will be evident from the claims and from the following description of examples of embodiment.

The drawings show respectively in perspective view and in plan view:
- Figs. 1,2,3: an embodiment of substantially triangular basic contour;
- Figs. 4,5: an embodiment of outwardly curved triangular basic contour;
- Figs. 6,7: an embodiment of substantially circular basic contour;
- Figs. 8,9: an embodiment of star-shaped basic contour;
- Figs. 10,11: an embodiment with a base plate and top plate;
- Fig. 12: an embodiment with lamellar rack elements;
- Fig. 13: a variant with web-like lugs as surface elements;
- Fig. 14: a variant of the embodiment according to Fig. 12 for an embodiment according to Fig. 11;
- Figs. 15-17: a variant of the embodiment according to Fig. 3;
- Figs. 18-20: a variant of the embodiment according to Fig. 4.

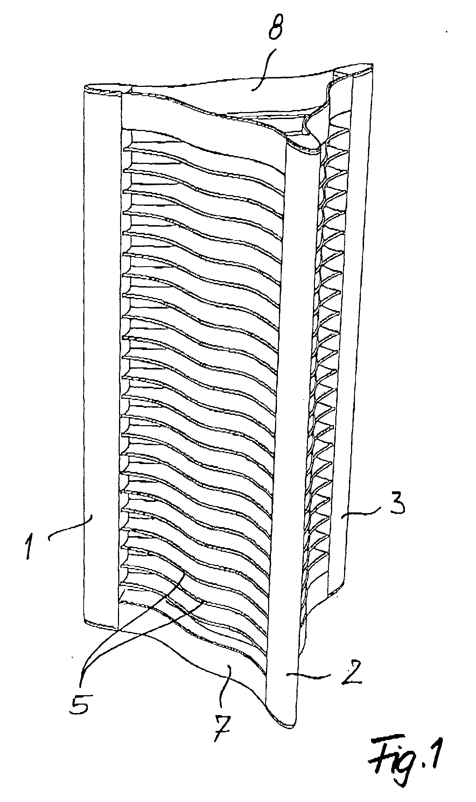

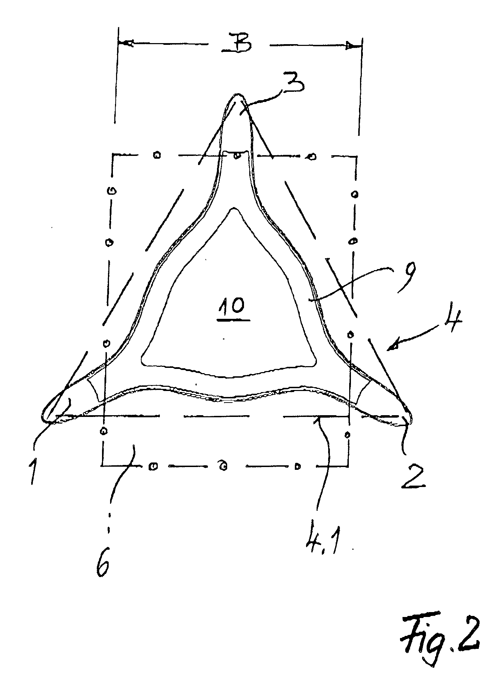

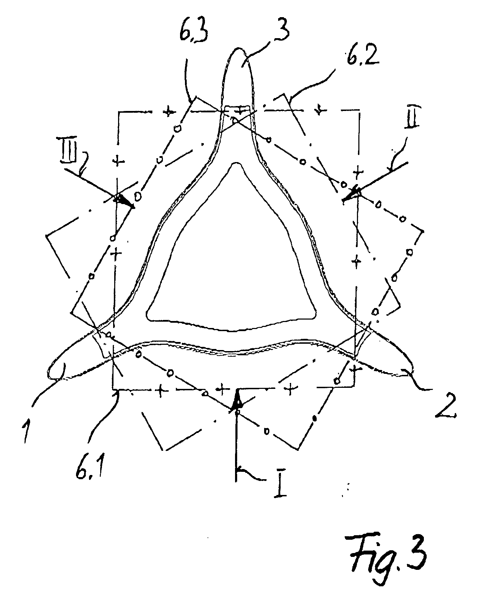

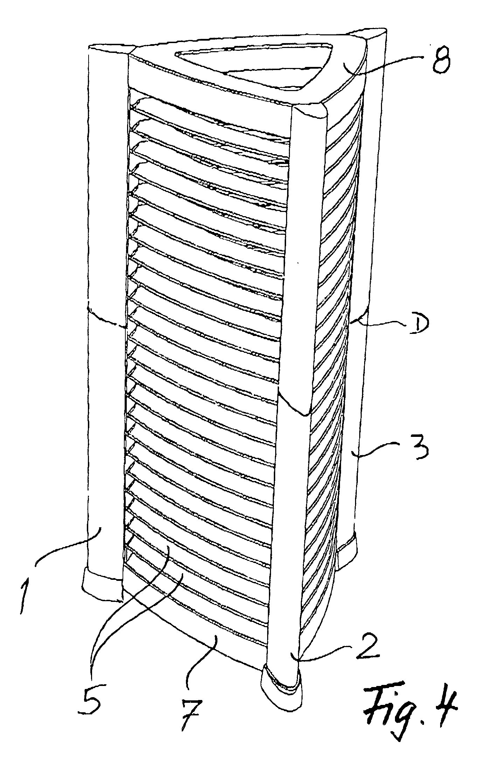

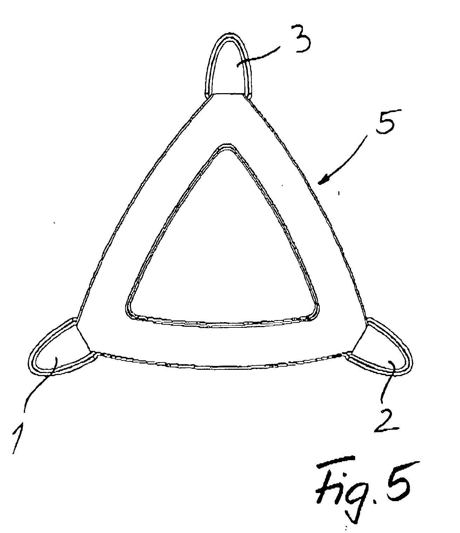

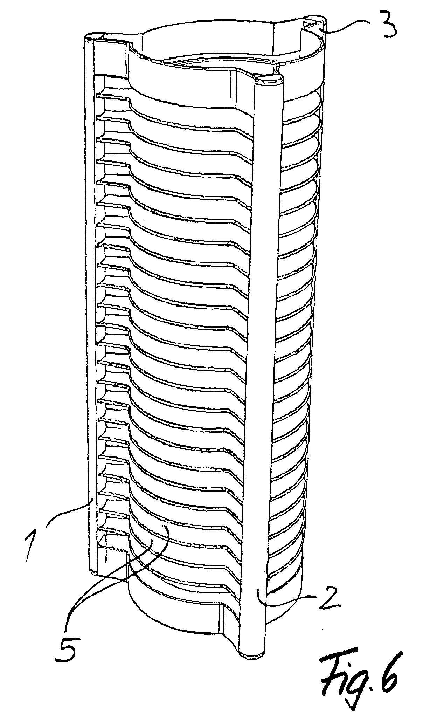

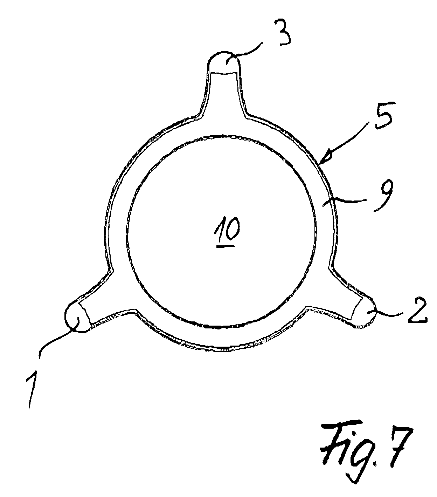

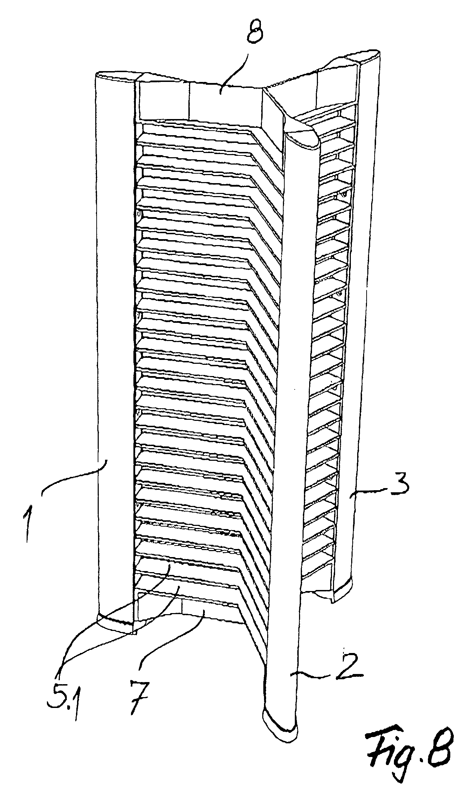

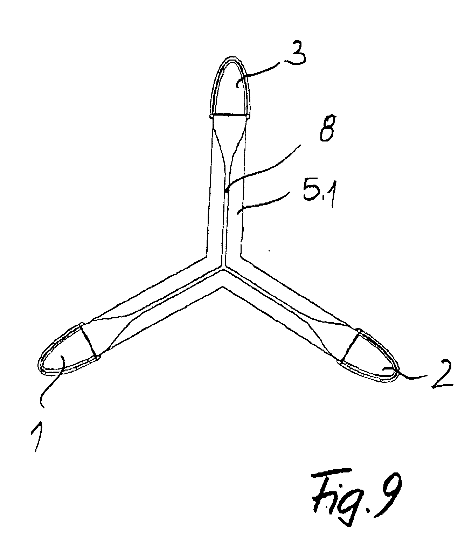

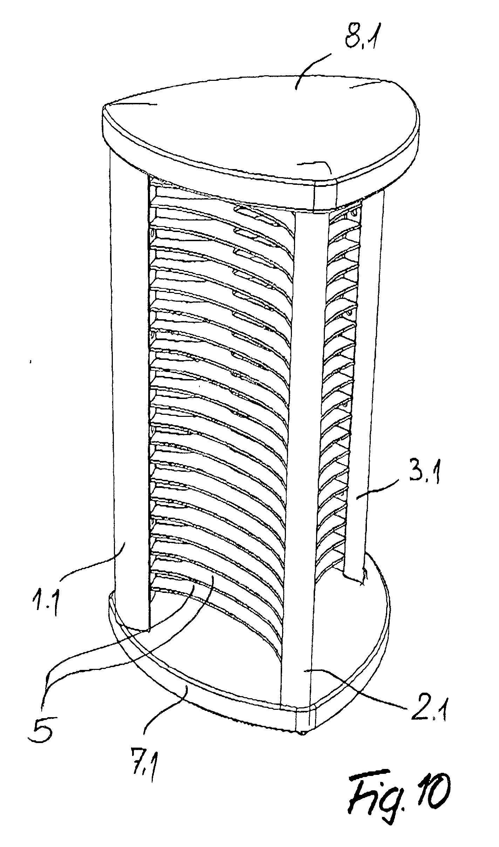

The example of embodiment illustrated in Fig. 1 for a column-like or tower-like stacking device for CD cases essentially comprises three rack elements 1,2 and 3 which, as is evident from Fig. 2, - in relation to a basic contour 4 in the form of an equilateral triangle - are arranged respectively at the vertices of the triangle. Between the three rack elements 1,2 and 3 there is provided a plurality of horizontal compartments 5 which in each case are arranged parallel one above the other and at a distance apart. The lateral distance between two rack elements 1,2 and 2,3 and 3, 1 respectively which are adjacent in the direction of a base line is, as is evident from Fig. 2, slightly larger than the width B of a CD case 6 to be inserted into a compartment. In each case two rack elements adjacent one another on a base line, for example the rack elements 1 and 2, define an insertion aperture, whereas the rack element 3 then serves as a limiting stop member for the CD case 6. It is thereby possible to insert a CD case from each side into each compartment. This is shown in plan view in Fig. 3 for illustrative purposes. The individual CD cases 6.1, 6.2, 6.3 can [sic] be inserted from each side of a base line 4.1 into a compartment of the stacking device.

As already mentioned, the rack elements 1,2 and 3 can be made in one piece, for example from wood, and can be securely connected to one another via a base member 7, which is of frame-like design in Fig. 1, but can also be in the form of a plate, as shown in Fig. 10, and also via a corresponding top member 8. The individual lamellar compartments are then secured, for example, in slots in the rack elements 1,2 and 3.

In a similar manner it is also possible for the rack elements to be produced individually in tubular form from a plastics material with corresponding insertion slots, and in a similar manner for the compartments to be of lamellar design with corresponding projections in the corner zones, which can be inserted into the insertion slots of the rack element. The three rack elements 1,2 and 3 are then rigidly joined together via a pushed-on base member 7 and a pushed-on base [sic] member 8.

The compartments can in this case take the form of continuous plates or else, as shown in Fig. 2, they can be of frame-like design with a web 9 defining the peripheral contour, which encloses a free space 10.

Fig. 3 shows in plan view the possibility of insertion for CD cases 6 which are then inserted one above the other in each case from a different side, as indicated by the arrows I,II and II.

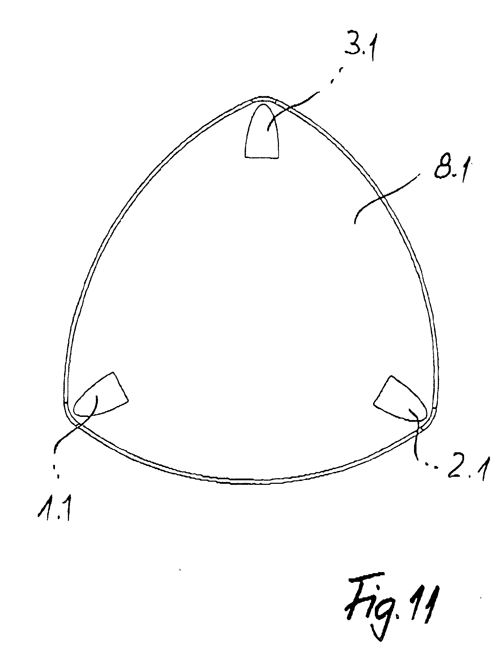

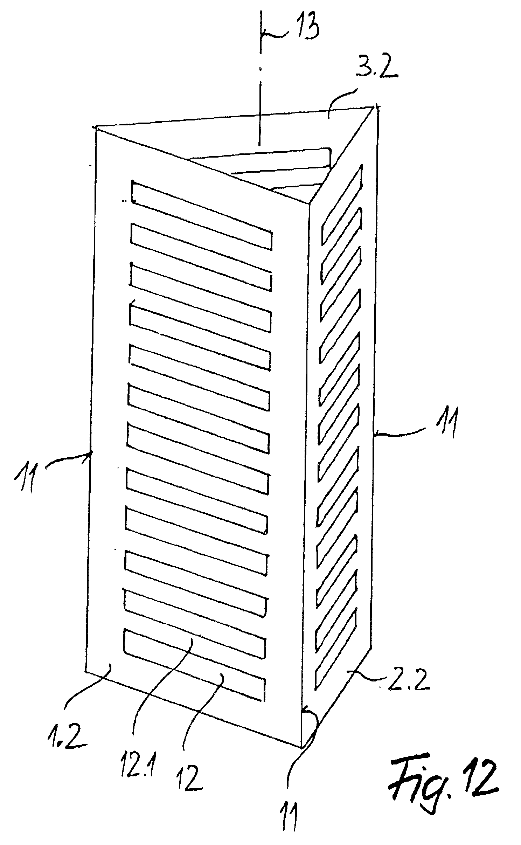

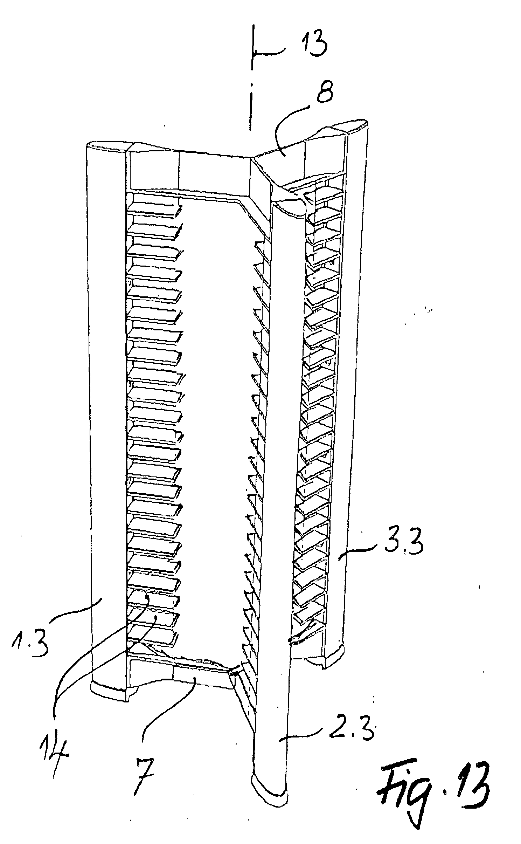

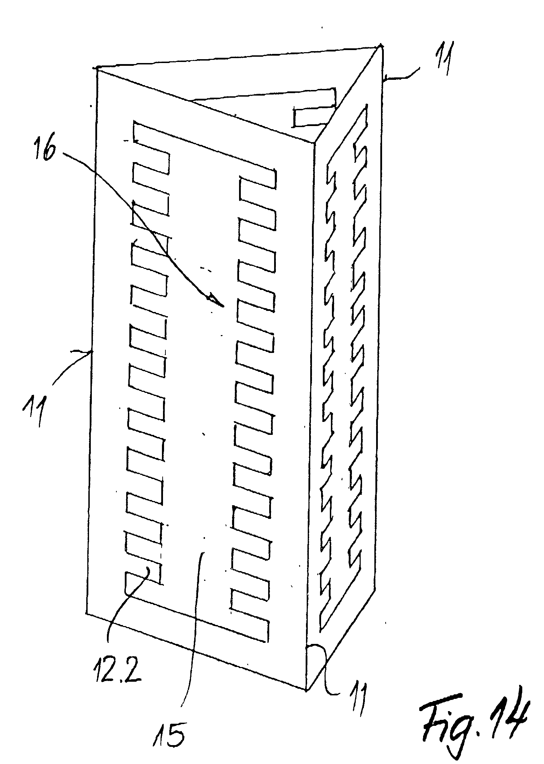

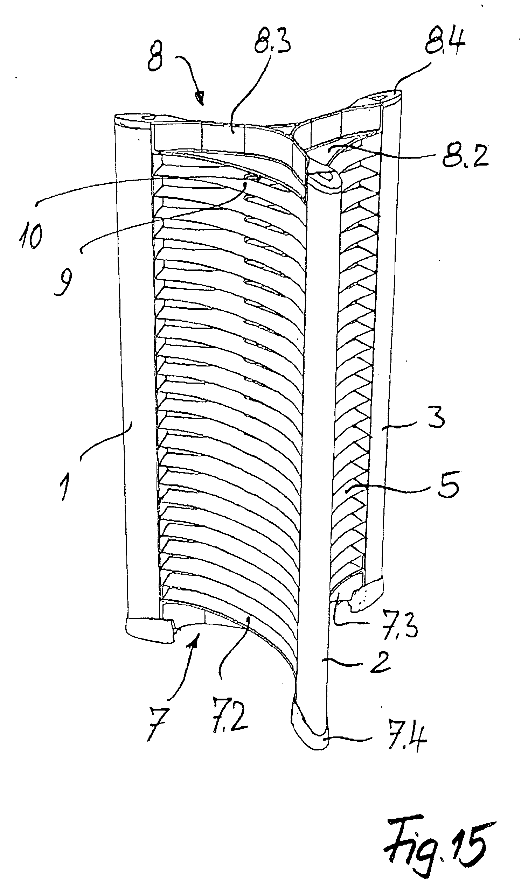

Figs. 4,5 illustrate an embodiment which corresponds in its construction to the embodiment according to Figs, 1,2 but which visually is of substantially triangular configuration with outwardly bulging contour. As indicated by the dividing line D in the rack elements, the device can be assembled from a plurality of component parts.

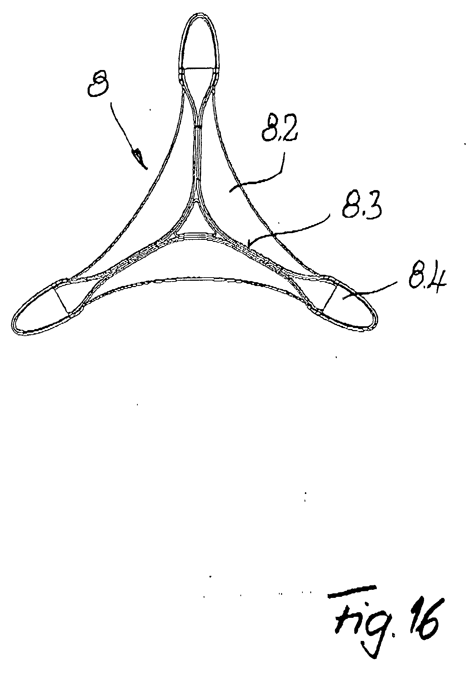

The embodiment according to Figs. 6, 7 corresponds in its construction to the embodiment according to Figs, 1,2. The difference merely lies in the fact that the stacking device is generally of rather cylindrical appearance over the peripheral contour of the compartments 5.

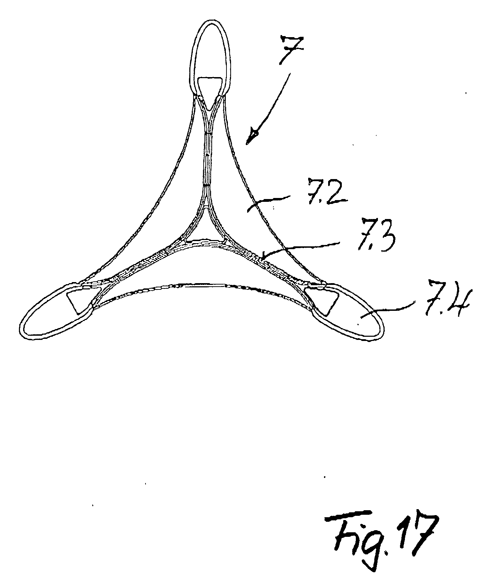

The embodiment according to Figs. 8,9 again corresponds in its basic construction to the embodiment according to Figs. 1,2. However, in this embodiment the compartments are formed by star-shaped flat webs 5,1 so that the stacking device is generally of star-shaped appearance.

Figs. 10 and 11 show an embodiment in which the base member 7.1 is in the form of a plate and the top member 8.1 is also plate-like and joins together the rack elements 1.1, 2.1 and 3.1. The special advantage of this embodiment lies in the fact that at least the base member 7.1 can be produced from a material of relatively high inherent weight, thereby imparting relatively high stability to the stacking device. As a variant each of the described embodiments can be provided in each case with a correspondingly formed plate-like base member 7.1 and/or a top member 8,1.

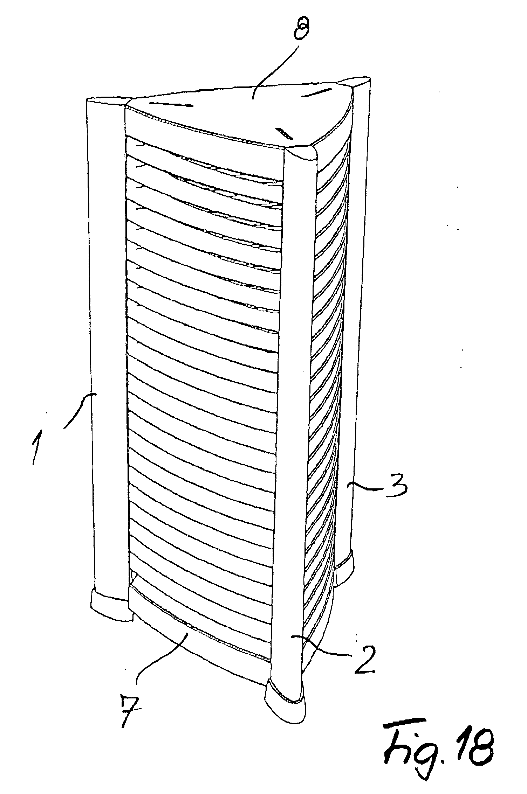

Fig. 12 illustrates an embodiment in which the rack elements 1.2,2.2 and 3.2 are each of lamellar design and are joined together in the vicinity of their lateral edges 11 so that the surface regions extend approximately along the base line 4. The individual rack elements are provided with slots 12 which are delimited by webs 12.1 and which form the compartments. In this embodiment too a CD case can be inserted from each side. The lamellar rack elements 1.1, 2.1 and 3.1 do not, as shown here, have to be flat but can be inwardly or outwardly curved in relation to the vertical centre axis 13. In this case the lateral edges 11 can extend at a distance apart and be securely connected to one another via transverse webs.

Fig. 13 illustrates a variant of the embodiment according to Fig. 8. In this embodiment the rack elements 1.3, 2.3, 3.3 are each securely joined together with a base member 7 and a top member 8. The compartments are in this case not formed by planar or frame-like parts which extend respectively up to the adjacent rack element. In this embodiment, as is evident from the view in Fig. 13, the compartments are each formed by web-like lugs 14 on the individual racks, which each point towards the centre axis 13. Each rack element is thus of comb-like structure.

The embodiment according to Fig. 12 can also be similar design. The individual webs defining the slots 12 do not extend over the full width of a rack element but only as lugs 12.2, as is illustrated in Fig. 14, in each case at a short distance from the lateral edge 11 so that the lamellar rack element has a central opening 15 which has a comb-like boundary line 16 in each case parallel to its two side edges 11.

Stacking devices of this type can be provided in each case in the vicinity of the base member and/or in the vicinity of the top member with recesses and/or projections so that a plurality of such stacking devices can be arranged tower-like one above the other by means of a plug-and-socket connection.

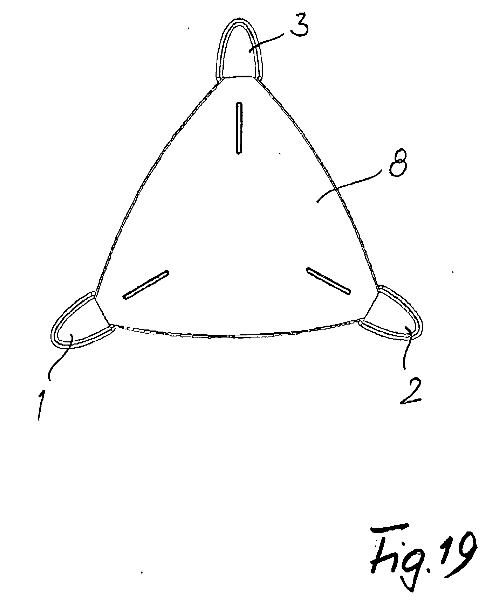

Fig. 15 illustrates a perspective view of a variant of the embodiment according to Fig. 8. In this embodiment, as is further evident from the plan view of the top member 8 in Fig. 16 and of the base member 7 in Fig. 17, respective boundary plates 8.2 and 7.2 are provided which are securely connected to vertically aligned webs 8.3 and 7.3 respectively which are arranged radially. The boundary plate 8.2 with the webs 8.3 and correspondingly the boundary plate 7.2 with the webs 7.3 respectively form the base member 7 and the top member 8. The webs 7.3. and 8.3 extend at the ends into connector elements 7.4 and 8.4 respectively which are aligned perpendicularly to the plane of the boundary plate 8.2. and which are correspondingly fitted into the ends of the hollow rack elements 1,2 and 3.

In this embodiment the frame-like compartments 5 are of approximately triangular ground plan contour in which, however, the peripheral contour extends inwardly curved between the rack elements 1,2 and 3. As is illustrated in Fig. 15, the compartments 5 are frame-like with a free space 10. However, it is also possible for the compartments to be of correspondingly lamellar form. The peripheral contour of the boundary plate 8.2 is in this case identical to the peripheral contour of the compartments 5.

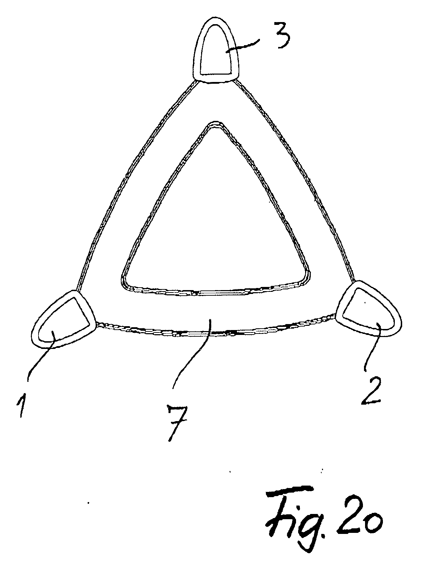

Figs. 18 to 20 illustrate a variant of the embodiment according to Fig. 4, namely in a perspective view (Fig. 18), in a top view of the top member 8 (Fig. 19) and in a view of the base member 7 from below (Fig. 20). In this embodiment the top member 8 is in the form of a plate. In this embodiment the base member 7 is of frame-like design, wherein the frame is substantially U-shaped in cross-section.

## Claims

1. A stacking device for CD cases or the like, with three rack elements (1,2,3) which in relation to a basic contour (4) are arranged in the form of an equilateral triangle, in each case at a vertex, and between which there is provided a plurality of horizontal compartments (5) which are respectively arranged one above the other and at a distance apart, wherein the lateral spacing between respective rack elements (1,2,3) which are adjacent in the direction of a base line (4.1) is slightly larger than the width (B) of a CD case (6) to be inserted into a compartment.

2. A stacking device according to Claim 1, **characterised in that** the rack elements (1,2,3) are each formed in one piece.

3. A stacking device according to either Claim 1 or Claim 2, **characterised in that** the compartments (5) are each connected individually to the rack elements (1,2,3).

4. A stacking device according to Claim 1 or 2, **characterised in that** a plurality of compartments (5) are joined together by adhesion or cohesion to form a compartment block which is connected to the rack elements (1,2,3).

5. A stacking device according to any one of Claims 1 to 4, **characterised in that** the rack elements (1,2,3) are each assembled from a plurality of component parts, wherein at least one compartment (5) is connected by adhesion or cohesion in each case to three component parts of the rack elements associated with the vertices.

6. A stacking device according to any one of Claims 1 to 5, **characterised in that** the rack elements (1,2,3) are joined together via a base plate (7).

7. A stacking device according to any one of Claims 1 to 6, **characterised in that** the rack elements (1,2,3) are joined together via a top element (8).

8. A stacking device according to any one of Claims 1 to 7, **characterised in that** the rack elements are each of lamellar design.

9. A stacking device according to any one of Claims 1 to 8, **characterised in that** the compartments (5) each have a free space (10) in the central region.

10. A stacking device according to any one of Claims 1 to 9, **characterised in that** at least in the vicinity of the rack elements (1,2 and 3) the compartments (5) are in each case formed by flat webs (5.1) which are joined together in the central region.

11. A stacking device according to any one of Claims 1 to 10, **characterised in that** the rack elements (1.3,2.3,3.3) are securely joined together by a base member (7) and a top member (8), and **in that** compartments are each formed by lugs (14) on the rack elements (1.3,2.3,3.3) which each extend in the direction of the central region (13).

12. A stacking device according to Claim 11, **characterised in that** the lugs (14) are of planar form.

13. A stacking device according to any one of Claims 1 to 12, **characterised in that** the rack elements (1.2,2.2.3.2) are lamellar and in each case extend along the basic contour (4) forming an equilateral triangle, wherein the compartments are formed by slots (12) in the interconnected lamellar rack elements.
